# EUROPEAN PATENT APPLICATION

(11) **EP 4 725 769 A1**
(43) Date of publication of application: **15.04.2026**
(21) Application number: 23943844.3
(22) Date of filing: 13.10.2023
(51) Int. Cl.: B60R 1/27, G06Q 50/40, G06Q 50/10

(54) **AVM SYSTEM HAVING IMAGE CONTROL FUNCTION REFLECTING DRIVING INFORMATION OF VEHICLE AND METHOD THEREOF**

(30) Priority: 28.06.2023 KR 20230083590
(71) Applicant: Aceveiw Co., Ltd., Siheung-si, Gyeonggi-do 14952 (KR)
(72) Inventor: SON, Seung Seo, Seoul 08521 (KR)
(74) Representative: AWA Sweden AB
(86) International application number: PCT/KR2023/015865
(87) International publication number: WO 2025/005351

(57) **Abstract**

Provided is an AVM (Around View Monitoring) system having an image control function, the AVM system including at least one vehicle AVM device installed in a vehicle and configured to collect a real-time image around the vehicle to generate and display a real-time AVM image, and to automatically switch a display screen of the real-time AVM image based on image display information preset for each event occurring when the vehicle is in motion or stopped, and an image control server connected to the vehicle AVM devices via a communication network, configured to collect location information of a corresponding vehicle and the real-time AVM image from each of the vehicle AVM devices, and to analyze and manage operation information of each of corresponding vehicles based on the collected information.

## Description

### [Technical Field]

The present invention relates to an AVM (Around View Monitoring) system.

### [Background Art]

An AVM system is technology for monitoring surroundings of a vehicle in motion, and collates images collected from a set number of cameras to provide an image of the surroundings of the vehicle. To this end, the AVM system typically includes four cameras installed on the front, rear, left, and right sides of the vehicle and a display installed inside the vehicle, collates images collected by the cameras to generate a 360-degree omnidirectional image, and then displays the image on the display.

Therefore, the AVM system may significantly reduce the likelihood of accidents that may occur during parking or driving by assisting a driver in accurately perceiving the surroundings of the vehicle. Furthermore, recently, autonomous vehicles are actively utilizing such an AVM system.

In relation to this system, Korean Patent No. 10-1366112 discloses a vehicle AVM system, including a first camera network constructed with some of cameras included in the AVM system, a second camera network constructed with some of the other cameras included in the AVM system, and a processor that generates a first image from images generated by the cameras included in the first camera network and generates a second image from images generated by the cameras included in the second camera network, wherein the cameras included in the first camera network and the cameras included in the second camera network are automatically varied according to a direction of travel of the vehicle, and the number of cameras in the first camera network and the number of cameras in the second camera network are maintained at original numbers.

According to the above patent, even when more cameras are installed in special vehicles such as buses and trucks than those in the AVM system for general vehicles to eliminate blind spots according to the characteristics of the vehicle, smooth networking is possible, so that image delay does not occur, and thus there is an advantage in that accidents caused by blind spots and image delay may be prevented.

However, such conventional technology does not provide an AVM image provision service that takes into account operation information of the vehicle, and thus cannot provide information necessary for drivers of vehicles in which an area that needs to be focused upon by the driver changes depending on the operation conditions of the vehicles such as buses in which vehicle operation conditions (for example, stops and starts, etc.) frequently change and an unspecified number of passengers board and alight, and as a result, accident prevention is limited.

That is, in the past, the entire synthesized image was displayed around the vehicle using a certain number of cameras, or the image information collected by each of the cameras was collectively displayed in a plurality of divided areas, so that the driver had to selectively check the area to focus on among the entire image depending on the driving situation. However, in the former case, there was a technical problem of blind spots, and in the latter case, there was a problem of degrading awareness by providing the plurality of divided areas at the same time, which could actually cause an accident.

In addition, previously, it was impossible to perform an image control function for remote monitoring and integrated control of AVM images reflecting vehicle operation information.

### [Prior Art Literature]

### [Patent Document]

(Patent Document 1) Korean Patent No. 10-1366112

### [Disclosure]

### [Technical Problem]

Therefore, to solve the above-mentioned problems, the present invention provides a vehicle real-time AVM system and a method therefor capable of improving awareness of drivers and effectively preventing accidents by reflecting operation information of the vehicle and selectively providing information necessary for safe driving, allowing necessary information to be appropriately provided to the drivers.

In addition, the present invention provides a vehicle real-time AVM system and a method therefor capable of automatically selecting and displaying information about an area that needs to be focused upon by a driver so that accidents caused by driver error may be effectively prevented by presetting image display information for each predicted event that may occur when the vehicle is in motion or stopped and then automatically switching a display screen of a real-time AVM image whenever an actual event occurs based on the image display information.

In addition, the present invention provides a vehicle real-time AVM system and a method therefor capable of strengthening surveillance in an area with high accident risk, thereby enabling intensive prevention of accidents caused by specific conditions with high accident risk by providing at least one additional camera to collect additional images under separate operation conditions, and preferentially displaying an additional image collected from the additional camera or a synthetic image with the additional image.

In addition, the present invention provides a vehicle real-time AVM system and a method therefor enabling faster and more accurate response to an accident or emergency event by delivering an AVM image generated by each of at least one vehicle AVM device reflecting operation information of each vehicle to an image control server, so that the AVM image reflecting the operation information of the vehicle may be subjected to remote monitoring and integrated control.

### [Technical Solution]

In accordance with an aspect of the present invention, the above and other objects can be accomplished by the provision of an AVM (Around View Monitoring) system having an image control function, the AVM system including at least one vehicle AVM device installed in a vehicle and configured to collect a real-time image around the vehicle to generate and display a real-time AVM image, and to automatically switch a display screen of the real-time AVM image based on image display information preset for each event occurring when the vehicle is in motion or stopped, and an image control server connected to the vehicle AVM devices via a communication network, configured to collect location information of a corresponding vehicle and the real-time AVM image from each of the vehicle AVM devices, and to analyze and manage operation information of each of corresponding vehicles based on the collected information.

The vehicle AVM device may include an AVM operation information storage unit configured to store AVM operation information including image display information preset for each of at least one predicted event predicted to occur when a vehicle is in motion or stopped, an image collection unit configured to collect real-time images around a first vehicle in motion or stopped, an image processing unit configured to generate a real-time AVM image from the collected image in response to an actual event occurring in the first vehicle, and a display unit configured to display the real-time AVM image, and the image processing unit detects image display information corresponding to the actual event from the AVM operation information storage unit, and generates the real-time AVM image based on the image display information.

The image display information may include division information of a screen of the display unit, which is differently set for each predicted event to display the real-time AVM image, and image matching information in which an image to be displayed is matched to each of divided screens divided based on the division information.

The AVM operation information may further include camera driving information matched to information on at least one AVM camera to be driven for each predicted event, and the image collection unit may detect the camera driving information corresponding to the actual event from the AVM operation information storage unit, and drive the AVM cameras based on the camera driving information to collect real-time images around the first vehicle.

The image collection unit may further include a first additional camera configured to selectively operate exclusively when a preset first operation condition is satisfied, and collect a first additional image that is a real-time additional image of a right front side of the first vehicle, and the display unit may switch a display screen to display the first additional image based on preset first additional image display information in response to operation of the first additional camera.

The vehicle AVM device may further include an object detection unit configured to detect presence/absence of an object located at a right front side of the first vehicle and a movement direction of the object, and the object detection unit may generate a first additional event for operating the first additional camera when an object approaching the right front side of the first vehicle is detected.

The vehicle AVM device may further include a second additional camera configured to selectively operate exclusively when a preset second operation condition is satisfied, and collect a second additional image that is a real-time additional image of an interior of the first vehicle, and the display unit may switch a display screen to display the second additional image based on preset second additional image display information in response to operation of the second additional camera.

In accordance with another aspect of the present invention, there is provided an AVM method having an image control function, the method using at least one vehicle AVM device installed in a vehicle and configured to collect a real-time image around the vehicle to generate and display a real-time AVM image and an image control server communicating with the vehicle AVM devices, the method including an AVM image display step of automatically switching, by the vehicle AVM device, a display screen of the real-time AVM image based on image display information preset for each of at least one predicted event that is predicted to occur when the vehicle is in motion or stopped, an AVM image transmission step of transmitting, by the vehicle AVM device, location information of a corresponding vehicle and the display screen of the real-time AVM image to the image control server based on preset image transmission conditions, and an image control step of analyzing and managing, by the image control server, operation information of each corresponding vehicle based on information received from the vehicle AVM device.

The AVM image display step may include an AVM operation information storage step of storing, by the vehicle AVM system, AVM operation information including image display information preset for each predicted event, an image collection step of collecting a real-time image around a first vehicle that is in motion or stopped, an image processing step of generating a real-time AVM image from the collected image in response to an actual event occurring in the first vehicle, and an image display step of displaying the real-time AVM image, and the image processing step may include detecting image display information corresponding to the actual event from the AVM operation information, and then generating the real-time AVM image based on the image display information.

The image display information may include division information of a screen of a display unit, which is differently set for each predicted event to display the real-time AVM image, and image matching information in which an image to be displayed is matched to each of divided screens divided based on the division information.

The AVM operation information may further include camera driving information matched to information on at least one AVM camera to be driven for each predicted event, and the image collection step may include detecting the camera driving information corresponding to the actual event from the AVM operation information, and then driving the AVM camera based on the camera driving information to collect a real-time image around the first vehicle.

The image collection step may further include a first additional image collection step of collecting a first additional image that is a real-time additional image of a right front side of the first vehicle when a preset first operation condition is satisfied, and the image display step may include automatically switching a display screen of the display unit to display the first additional image based on preset first additional image display information in response to collection of the first additional image.

The first additional image collection step may further include a monitoring step of intensively monitoring the right front side of the first vehicle, and the first additional image collection step may include collecting the first additional image when an object approaching the right front side of the first vehicle is detected as a result of the monitoring.

The image collection step may further include a second additional image collection step of collecting a second additional image that is a real-time additional image of an interior of the first vehicle when a preset second operation condition is satisfied, and the image display step may include switching a display screen of the display unit to display the second additional image based on preset second additional image display information in response to collection of the second additional image.

### [Advantageous effects]

The vehicle real-time AVM system and a method therefor of the present invention described above have an advantage of improving awareness of drivers and effectively preventing accidents by reflecting operation information of the drivers and selectively providing information necessary for safe driving, allowing necessary information to be appropriately provided to the drivers.

In addition, the present invention has an advantage of automatically selecting and displaying information about an area that needs to be focused upon by a driver so that accidents caused by driver error may be effectively prevented by presetting image display information for each predicted event that may occur when the vehicle is in motion or stopped and then automatically switching a display screen of a real-time AVM image whenever an actual event occurs based on the image display information.

In addition, the present invention has an advantage of strengthening surveillance in an area with high accident risk, thereby enabling intensive prevention of accidents caused by specific conditions with high accident risk by providing at least one additional camera to collect additional images under separate operation conditions, and preferentially displaying an additional image collected from the additional camera or a synthetic image with the additional image.

In addition, the present invention has an advantage of enabling faster and more accurate response to an accident or emergency event by delivering an AVM image generated by each of at least one vehicle AVM device reflecting operation information of each vehicle to an image control server, so that the AVM image reflecting the operation information of the vehicle may be subjected to remote monitoring and integrated control.

### [Description of Drawings]

FIG. 1 is a schematic system configuration diagram of a vehicle real-time AVM system according to an embodiment of the present invention;
FIG. 2 is a schematic block diagram of a vehicle AVM device according to an embodiment of the present invention;
FIG. 3A and FIG. 3B are diagrams for describing installation positions and operation information of AVM cameras according to an embodiment of the present invention;
FIG. 4 is a diagram for describing attachment positions of a sensor unit for detecting an object approaching a vehicle in which the vehicle AVM device according to an embodiment of the present invention is installed;
FIGs. 5A and 5B are diagrams for describing a principle of detecting approach of an object using the sensor unit attached to the vehicle AVM device according to an embodiment of the present invention is installed;
FIG. 6 is a diagram illustrating AVM operation information preset for each predicted event according to an embodiment of the present invention;
FIG. 7A to FIG. 7D are diagrams illustrating display screens of the vehicle AVM device according to an embodiment of the present invention;
FIG. 8 is a schematic block diagram of an image control server according to an embodiment of the present invention; and
FIGs. 9 to 12 are schematic process flow diagrams of an AVM method having a real-time image control function according to an embodiment of the present invention.

### [Best Mode]

Hereinafter, embodiments of the present invention will be described in detail with reference to the attached drawings so that those skilled in the art may easily practice the present invention. However, the present invention may be implemented in various different forms and is not limited to the embodiments described herein. Meanwhile, in the drawings, parts unrelated to the description are omitted to clearly describe the present invention, and similar parts are designated with similar reference numerals throughout the specification. In addition, description of parts that may be easily understood by those skilled in the art without a detailed description is omitted.

Throughout the specification and claims, whenever a part is described as including a certain component, this does not mean that other components are excluded, but rather that other components may be further included, unless specifically stated otherwise.

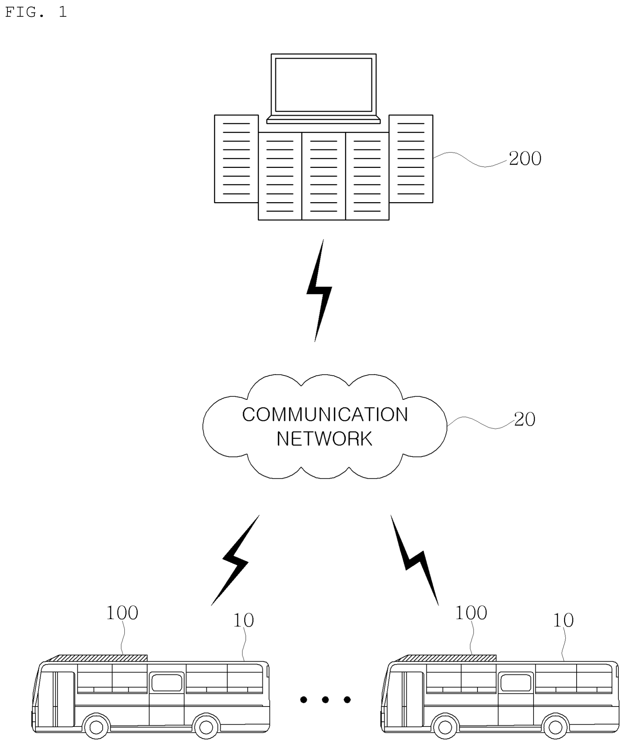

FIG. 1 is a schematic system configuration diagram of a vehicle real-time AVM system according to an embodiment of the present invention. Referring to FIG. 1, the vehicle real-time AVM system according to an embodiment of the present invention includes vehicle AVM devices 100 installed in respective vehicles 10 (for example, vehicles that are in motion or stopped), and an image monitoring server 200 connected to the vehicle AVM devices 100 via a communication network 20 to perform image control on the vehicles 10.

The vehicle AVM device 100 is installed in at least one vehicle 10, collects real-time images from around the corresponding vehicle 10, and generates and displays a real-time AVM image. In particular, the vehicle AVM device 100 may automatically switch a display screen of the real-time AVM image based on preset image display information for each event occurring when the vehicle is in motion or stopped. To this end, the vehicle AVM device 100 may include various sensors, AVM cameras, and a display. However, in the example of FIG. 1, for convenience of description, the vehicle AVM device 100 corresponding to each vehicle 10 is illustrated in a simplified manner.

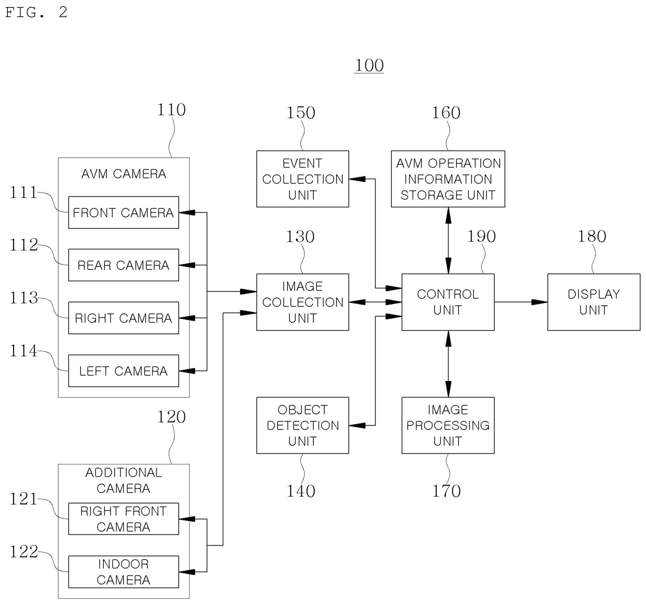

A configuration and detailed operations of the vehicle AVM device 100 for this purpose will be described later with reference to FIG. 2 to FIG. 7D.

The image control server 200 is connected to each of at least one vehicle AVM devices 100 via the communication network 20, collects location information of the corresponding vehicle and the real-time AVM image from each vehicle AVM device 100, and analyzes/manages operation information of each corresponding vehicle based on the collected information.

That is, the image control server 200 may recognize operation information of each of the at least one vehicles and various situations occurring around the vehicles through the real-time AVM images transmitted from the vehicle AVM device 100.

For example, when an arbitrary route bus service is delayed, the image control server 200 may monitor the surrounding situation of the vehicle through the real-time AVM image to determine whether the service delay is caused by an accident or by a simple delay, and transmit a result to an administrator or a driver, thereby enabling a rapid and accurate response.

In addition, after recognizing an emergency situation occurring inside the vehicle through an interior image of the vehicle transmitted from the vehicle AVM device 100, the image control server 200 may notify the driver who has not noticed the situation, or notify a relevant authority when dispatch of rescue personnel is required, thereby enabling a prompt response to emergency situations that may occur on the road or inside the vehicle.

FIG. 2 is a schematic block diagram of the vehicle AVM device according to an embodiment of the present invention. Referring to FIG. 2, the vehicle AVM device 100 according to the embodiment of the present invention includes an AVM camera 110, an additional camera 120, an image collection unit 130, an object detection unit 140, an event collection unit 150, an AVM operation information storage unit 160, an image processing unit 170, a display unit 180, and a control unit 190.

The AVM camera 110 is installed inside and/or outside the vehicle to capture real-time images of the surroundings of the vehicle. To this end, the AVM camera 110 includes a front camera 111 configured to capture a front side of the vehicle, a rear camera 112 configured to capture a rear side of the vehicle, a right camera 113 configured to capture a right side of the vehicle, and a left camera 114 configured to capture a left side of the vehicle.

Each of the cameras 111 to 114 may be driven when the vehicle is in motion or stopped, or in response to an operation command transmitted from outside, to capture real-time images of the surroundings of the vehicle according to respective installation positions.

In this instance, each of the cameras 111 to 114 may be simultaneously collectively driven in a batch to generate a real-time 360° image of the surroundings of the vehicle, or may be selectively driven according to operation information (that is, camera driving information) preset for each type of event predicted to occur in the vehicle (that is, for each predicted event). To this end, the control unit 190 may, upon initiation of operation of the vehicle AVM device 100, simultaneously drive all of the cameras 111 to 114, or may match an event actually occurring when the vehicle is in motion or stopped (that is, an actual event) with the predicted event, detect camera driving information corresponding to the actual event, and then selectively drive the cameras based on a result of the detection.

In this instance, the predicted event may include operation of left/right turn signals, opening/closing of a vehicle door, operation of at least one switch installed in a driver's seat, and operation of a stop request button.

For example, when the vehicle is traveling straight, the control unit 190 may simultaneously operate all of the cameras 111 to 114 and provide a top-view image generated using information collected at that time to the driver. When a right turn signal is turned on, that is, when a right turn signal event occurs, the control unit 190 may selectively operate the cameras 111 to 114 according to preset operation information corresponding thereto. When the camera driving information corresponding to the right turn signal event includes only the right camera 113, the control unit 190 may operate only the right camera 113, and control the cameras 111 to 114 and peripheral devices (for example, the display unit 180) to intensively collect and provide only a real-time image of the right side of the vehicle.

The additional camera 120 operates under separate operation conditions different from the operation information of the AVM camera 110 to capture an additional image. That is, the additional camera 120 is additionally installed to intensively prevent accidents caused by specific conditions with a high risk of accidents, and normally operates in a standby mode. When a specific event occurring in the vehicle (for example, operation of a right turn signal or opening of a door), or a separately preset operation condition (for example, a driver request, or detection of an object or a person approaching the vehicle) is satisfied, the additional camera 120 operates to capture an image of a corresponding area.

In this instance, the specific conditions with a high risk of accidents may include a case in which the vehicle makes a right turn, a case in which a person or an object is detected around the vehicle, a case in which a person or an object moving toward the vehicle is detected, a case in which passengers board or alight from a route bus, or a case in which a dangerous situation occurs inside the vehicle.

The additional camera 120 may include a right front camera 121 configured to capture a right front side of the vehicle, and an indoor camera 122 configured to capture an interior of the vehicle, and additional images collected by the additional camera 120 may be provided to the driver independently or by being synthesized with images collected by the AVM camera 110.

The right front camera 121 is a camera for intensively capturing the right front side of the vehicle, and may operate in a special situation in which monitoring of the right front side needs to be enhanced. For example, when an event for operating a right turn signal is detected in the vehicle, when a steering wheel is rotated to the right by a predetermined angle or more, or when a person or an object approaching the right front side of the vehicle is detected, the control unit 190 may operate the right front camera 121 to enhance right-front monitoring.

This is to reduce the risk of accidents caused by characteristics in which a driver of a vehicle having a driver's seat located on a left front side has difficulty ensuring a field of view of the right front side, thereby making it difficult to recognize surrounding situations on the right front side of the vehicle, and by the presence of blind spots in a corner area of the right front side of the vehicle that are difficult to capture using only the front camera 111 and the right camera 113. Accordingly, when a right turn is detected due to a specific event occurring in the vehicle (for example, turning on of a right turn signal or a rightward rotation angle of the steering wheel), or when a person or an object is detected in a right traveling direction of the vehicle or around the right front side of the vehicle by a detection device installed outside the vehicle, the control unit 190 operates the right front camera 121 so that the driver may intensively monitor the right front side of the vehicle, thereby eliminating blind spots in the right front side of the vehicle and reducing the risk of accidents.

In particular, in a traffic system in which a driver of a vehicle traveling in a rightward direction makes a right turn at an intersection without receiving a separate signal, it is possible to prevent accidents caused by the driver failing to recognize a pedestrian.

As described above, the present invention includes the right front camera 121 that operates under separate operation conditions, and operates the right front camera 121 when the conditions are satisfied, thereby preventing accidents caused by the driver having difficulty in recognizing a person or an object located in the right traveling direction of the vehicle or around the right front side of the vehicle.

Meanwhile, in the case of a vehicle in which the driver's seat is located at the right front side, by installing an additional camera on the left-front side rather than on the right front side, left-front monitoring may be strengthened in special situations in which left-front monitoring needs to be reinforced (for example, a left turn).

The indoor camera 122 is a camera for intensively capturing the interior of the vehicle, and may operate in special situations in which monitoring of the vehicle interior (that is, the inside of the vehicle) needs to be enhanced. For example, when an event for opening a door of the vehicle is detected or when a driver request signal is detected, the control unit 190 may operate the indoor camera 122 to strengthen monitoring of the vehicle interior. To this end, at least one indoor camera 122 may be installed inside the vehicle, and may be distributed and arranged in the interior of the vehicle so as to capture the entire interior. In addition, an operation key for operating the indoor camera 122 may be further provided around the driver's seat.

Accordingly, when the door opening event occurs or when the driver, who has determined that it is necessary to monitor the situation inside the vehicle, operates the operation key, the indoor camera 122 operates to capture the interior of the vehicle and may provide the information to the driver in real time.

This is intended to prevent accidents that may occur in vehicles such as route buses that periodically operate along predetermined routes and repeatedly stop and depart to assist an unspecified number of passengers in boarding/alighting, in cases where the driver fails to accurately detect a situation in which passengers are boarding/alighting or fails to recognize people or objects located around the stopping position of the vehicle.

That is, the indoor camera 122 determines operation in response to a door open or close signal, and operates when the door is opened to collect surrounding images. Alternatively, when a door opening signal is generated, the indoor camera 122 may operate together with the right camera 113 to synthesize respective collected images, so that surrounding situations inside and outside the vehicle door may be to accurately delivered to the driver.

Meanwhile, the right front camera 121 and the indoor camera 122 may operate under the control of the control unit 190, or under the control of the image collection unit 130 that operates under the control of the control unit 190.

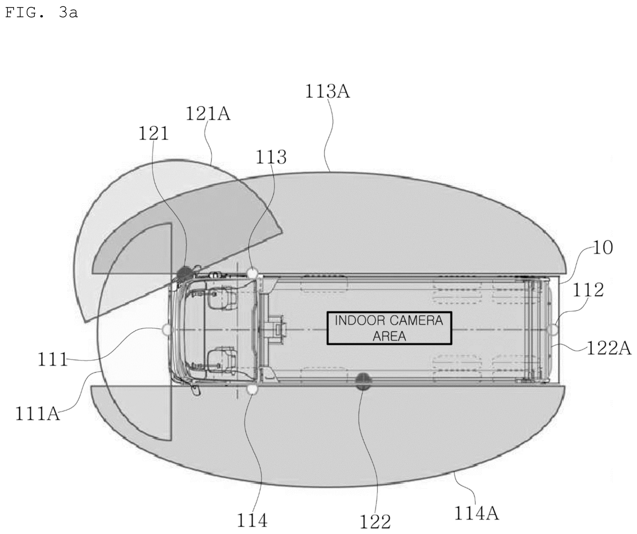

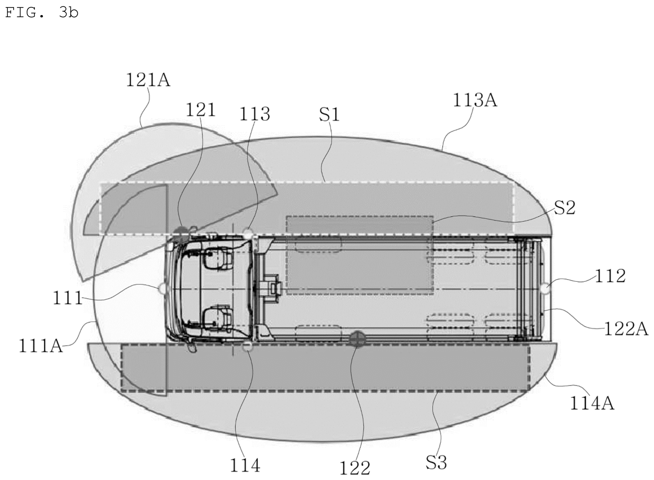

FIG. 3A and FIG. 3B are diagrams for describing installation positions and operation information of AVM cameras according to an embodiment of the present invention. FIG. 3A illustrates respective installation positions and respective imaging areas of the AVM camera 110 and the additional camera 120, FIG. 3B illustrates imaging areas reflecting operation information of the vehicle, and FIG. 2B illustrates surveillance areas determined by reflecting the operation information of the vehicle.

Referring to FIG. 3A, it can be seen that the vehicle AVM device 100 of the present invention includes the front camera 111 (imaging area 111A) installed at the front of the vehicle 10, the rear camera 112 (imaging area omitted) installed at the rear of the vehicle 10, the right camera 113 (imaging area 113A) installed on the right side of the vehicle 10, the left camera 114 (imaging area 114A) installed on the left side of the vehicle 10, the right front camera 121 (imaging area 121A) installed at the right front side of the vehicle 10, and the indoor camera 122 (imaging area 122A) installed on the left inner side of the vehicle 10.

The vehicle AVM device 100 of the present invention may determine a surveillance area reflecting the operation information of the vehicle 10 by collectively or selectively operating each of the cameras 111 to 114, 121 and 122 installed as illustrated in FIG. 3A. Referring to FIG. 3B, during a right turn, the front camera 111, the right camera 113, and the right front camera 121 are operated to intensively monitor a first area S1. During stopping, the right camera 113 and the indoor camera 122 are operated to intensively monitor a second area S2. During a left turn, the front camera 111 and the left camera 114 are operated to intensively monitor a third area S3.

As described above, the vehicle AVM device 100 of the present invention may collectively or selectively operate each of the cameras 111 to 114, 121, and 122 by reflecting the operation information of the vehicle 10, so that images of the areas 111A to 114A, 121A, and 122A corresponding to the respective driving states of the vehicle 10 may be collectively or selectively captured, which may be used to selectively generate and provide real-time AVM images around the vehicle 10, thereby improving driver awareness to effectively prevent accidents.

The image collection unit 130 collects real-time images around the vehicle 10 from at least one of the AVM cameras 110 or the additional camera 120. To this end, the image collection unit 130 may be controlled by the control unit 190, and collect images captured in real time for corresponding areas from at least one of the front camera 111, the rear camera 112, the right camera 113, the left camera 114, the right front camera 121, or the indoor camera 122 installed in the vehicle 10 that is in motion or stopped. In particular, the image collection unit 130 may collect images captured in real time from the right front camera 121 and the indoor camera 122 only when preset operation conditions for the right front camera 121 and the indoor camera 122 are satisfied. For example, after detecting camera driving information corresponding to an actual event from the AVM operation information storage unit 160 described later, the image collection unit 130 may drive the AVM cameras 111 to 114 and the additional cameras 121 and 122 based on the camera driving information, thereby collecting real-time images around the corresponding vehicle 10.

The object detection unit 140 detects the presence/absence and movement direction of an object or a person located around the vehicle, and generates an additional event based on a result of detection. For example, the object detection unit 140 may detect an object or a person located at the right front side of the vehicle, where it is difficult for the driver to ensure visibility, and the movement direction thereof, and based on the result, may generate an additional event for operating the right front camera 121 and transmit the additional event to the control unit 190. To this end, the object detection unit 140 may be implemented as a plurality of ultrasonic sensors or a plurality of LiDAR sensors, and is preferably installed at the right front side of the vehicle.

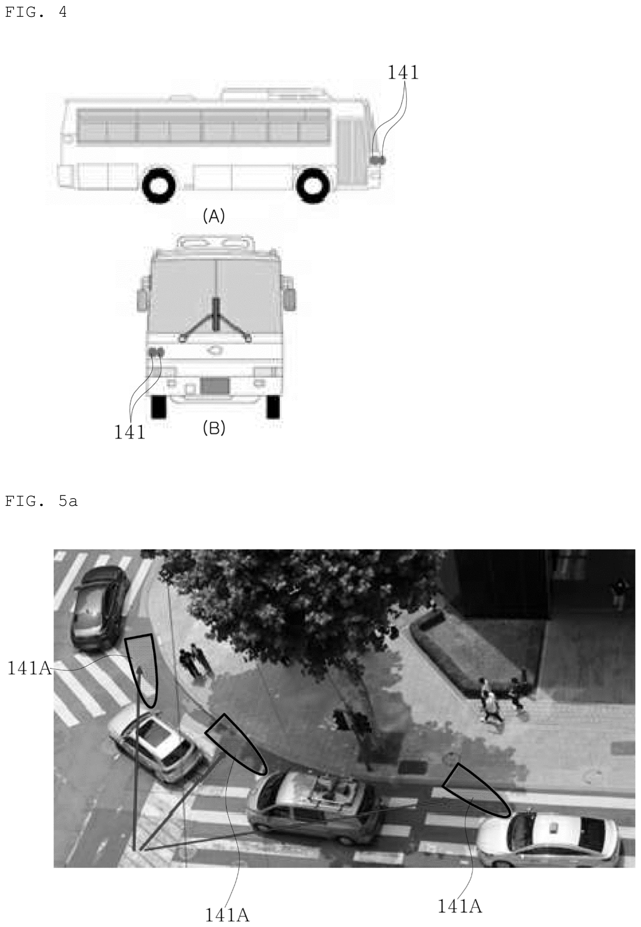

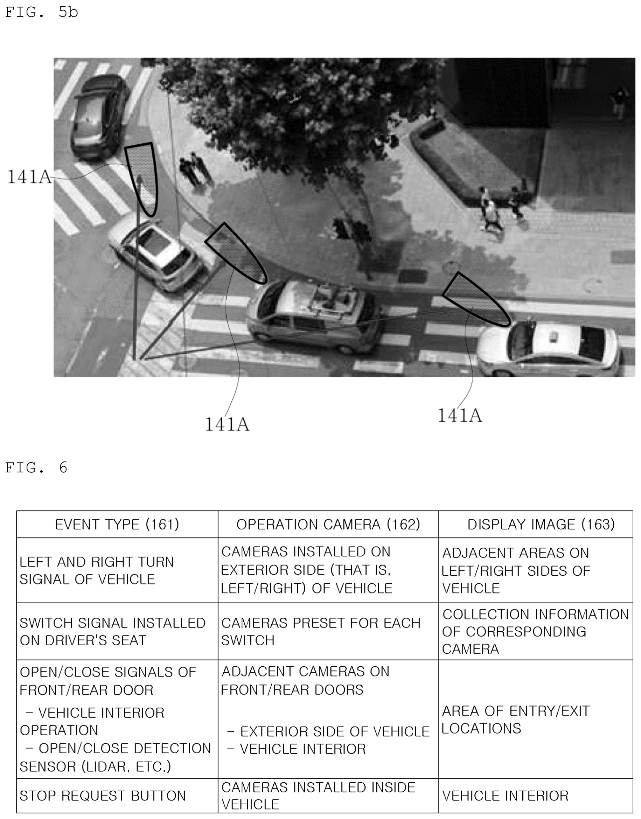

FIG. 4 is a diagram for describing attachment positions of a sensor unit for detecting an object approaching a vehicle in which the vehicle AVM device according to an embodiment of the present invention is installed, and illustrates an example in which the object detection unit 140 including a plurality of sensors 141 is installed adjacent to the right front side of the vehicle 10 (that is, a bus). FIGs. 5A and 5B are diagrams for describing a principle of detecting approach of an object using the sensor unit attached to the vehicle real-time AVM system. FIG. 5A illustrates a detection area 141A formed in front of vehicles turning right with the sensors 141 attached at the right front side, and FIG. 5B illustrates a principle of determining whether a pedestrian is approaching by detecting the pedestrian and a movement direction of the pedestrian in the detection area 141A.

Referring to FIGs. 4, 5A, and 5B, each of the plurality of sensors 141 installed adjacent to the right front side of the vehicle outputs detection signals L1 and L2 (for example, ultrasonic signals, laser pulses, etc.) to detect an object or a person approaching the vehicle 10, and outputs the detection signals in directions such that an angle therebetween increases as a distance from the vehicle 10 increases. This is to ensure the detection area for detecting the object or the person. When the angle therebetween is narrow, the detection distance is long but the detection region around the vehicle is narrow. Conversely, when the angle is wide, the detection distance is short but the detection region around the vehicle is wide. Accordingly, it is preferable to determine installation intervals of the plurality of sensors 141 in consideration of a height and width of the vehicle.

Referring to FIG. 5B, each detection area 141A may be formed by a plurality of detection signals L1 and L2 as illustrated on the left side of the figure, and as illustrated on the right side of the figure, a movement direction of a pedestrian may be determined by the order in which the pedestrian contacts the plurality of detection signals L1 and L2. For example, when the pedestrian passes through the first detection signal L1 and then contacts the second detection signal L2, the movement direction of the pedestrian is from the right to the left in the figure, and in the opposite case, the movement direction of the pedestrian is reversed. When the pedestrian contacts only one of the plurality of detection signals L1 and L2, it is possible to determine that the pedestrian is not approaching the vehicle 10. Meanwhile, whether the pedestrian contacts the plurality of detection signals L1 and L2 may be determined based on whether each of the plurality of detection signals L1 and L2 is disconnected.

By such operations, the object detection unit 140 detecting presence/absence and a movement direction of an object or a person located around the vehicle may further include a means for generating the additional event and generating a warning sound to notify the pedestrian of danger (for example, a buzzer). Alternatively, the vehicle AVM device 100 of the present invention may further include an acoustic output means (for example, a speaker) (not illustrated), and the control unit 190 may control the acoustic output means in response to the additional event to output a warning sound.

The event collection unit 150 collects actual events occurring in the vehicle 10 in real time and delivers the events to the control unit 190. To this end, the event collection unit 150 may collect information from an electronic control unit that controls the operation of the vehicle 10, or may collect the actual events in real time using signals detected through a separate sensor unit.

The AVM operation information storage unit 160 stores preset operation information of the vehicle AVM device 100. That is, the AVM operation information storage unit 160 may store AVM operation information including image display information and camera driving information preset for each predicted event that is expected to occur when the vehicle is in motion or stopped.

In this instance, the image display information may include division information of a screen of the display unit screen, which is differently set for each predicted event to display real-time AVM images, and image matching information in which an image to be displayed is matched to each of divided screens divided based on the division information. Meanwhile, the camera driving information may include information on at least one AVM camera to be driven for each predicted event.

FIG. 6 is a diagram illustrating AVM operation information preset for each predicted event according to an embodiment of the present invention, and illustrates AVM operation information stored in the AVM operation information storage unit 160.

Referring to FIG. 6, the AVM operation information may include fields of an event type 161, an operation camera 162, and a displayed image 163. In the field of the event type 161, the predicted events that may occur may be stored. In the field of the operation camera 162, information on cameras that need to be selectively operated in response to the predicted events may be stored. In the field of the displayed image 163, information on an area that needs to be intensively monitored for the predicted events to enhance awareness of the driver may be stored. In this instance, the types of predicted events and the information on the corresponding operation camera and display image are as illustrated in FIG. 6. Meanwhile, FIG. 6 merely illustrates an example of the AVM operation information, and examples of the types of predicted events and the corresponding AVM operation information are not limited to those illustrated in FIG. 6.

The image processing unit 170 generates a real-time AVM image from images collected through the image collection unit 130 in response to an actual event occurring in the vehicle 10. To this end, the image processing unit 170 may detect image display information corresponding to the actual event from the AVM operation information storage unit 160, and may generate the real-time AVM image based on the detected image display information. For example, when the actual event collected through the event collection unit 150 is a stop request button, the image processing unit 170 may detect AVM operation information corresponding to the stop request button (that is, the camera operation information and the image display information) from the AVM operation information storage unit 160 as illustrated in FIG. 6, then collect images captured by a camera installed inside the vehicle based on a result of detection, and generate a real-time AVM image for displaying the interior of the vehicle.

In this instance, the image processing unit 170 generates the real-time AVM image using a preset image processing algorithm, and may process an image collected from at least one camera selectively operated by the AVM operation information so that the image is divided and displayed, or synthesize these images.

The display unit 180 displays the real-time AVM image generated by the image processing unit 170. To this end, the display unit 180 operates under the control of the control unit 190, and may configure a display screen differently depending on the type of actual event. That is, the display unit 180 may configure and display the screen so as to enhance awareness of the driver according to the types of actual events that may occur when the vehicle is in motion or stopped. To this end, the display unit 180 may display the real-time AVM image based on image display information in which the number, sizes, and positions of the divided screens are differently set according to the type of actual event, and may operate under the control of the control unit 190, which controls the operation of the display unit 180 based on the image display information stored in the AVM operation information storage unit 160.

Meanwhile, the image display information may be preset differently for each type of predicted event and stored in the AVM operation information storage unit 160.

In addition, the display unit 180 may automatically switch the display screen to display the additional image collected through the additional camera 120 in response to the operation of the additional camera 120. To this end, the image display information may further store additional image display information for automatically switching the screen according to the type of additional image collected through the additional camera 120.

For example, the display unit 180 may automatically switch the display screen to display a right-front image of the vehicle in response to the operation of the right front camera 121. When a pedestrian approaches the right front side of the vehicle, the display unit 180 may automatically switch the screen such that the entire screen displays the right-front image of the vehicle, or may switch a display state to display the right-front image in a picture-in-picture form while maintaining the current screen, or may switch the display state to replace a partial area of the current screen with the right-front image.

Meanwhile, the display unit 180 automatically switches the display screen to display an interior image of the vehicle in response to the operation of the indoor camera 122. In particular, when the vehicle door is closed or the vehicle enters a departure standby state, the display unit 180 may automatically switch the screen such that the entire screen displays images from the indoor camera 122 and the right camera 113, respectively, or a synthetic image thereof, in order to report whether passengers are boarding/alighting the vehicle. Alternatively, the display unit 180 may switch the display state to display a real-time image including an interior image around the door in a picture-in-picture form while maintaining the current screen, or may switch the display state to replace a partial area of the current screen with the interior image.

To this end, image display information for displaying the right-front image and image display information for displaying the real-time image including an interior image around the door need to be registered in advance in the AVM operation information storage unit 160, and the control unit 190 may control the operation of the display unit 180 based on the information stored in the AVM operation information storage unit 160.

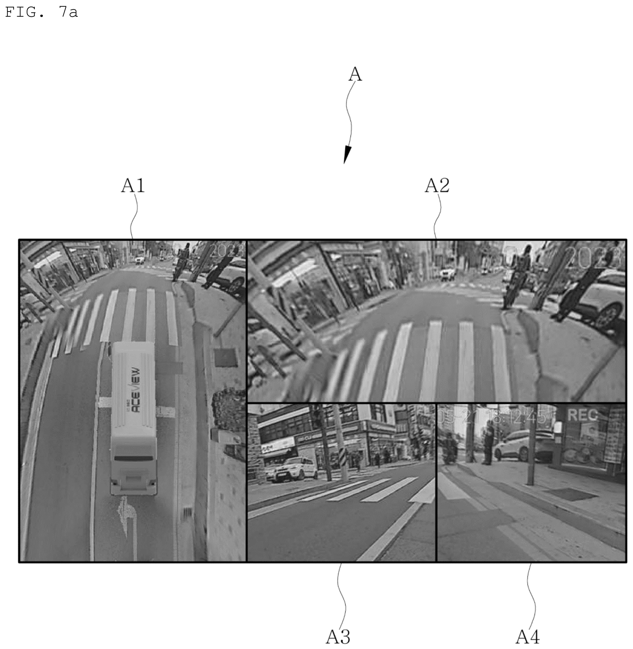

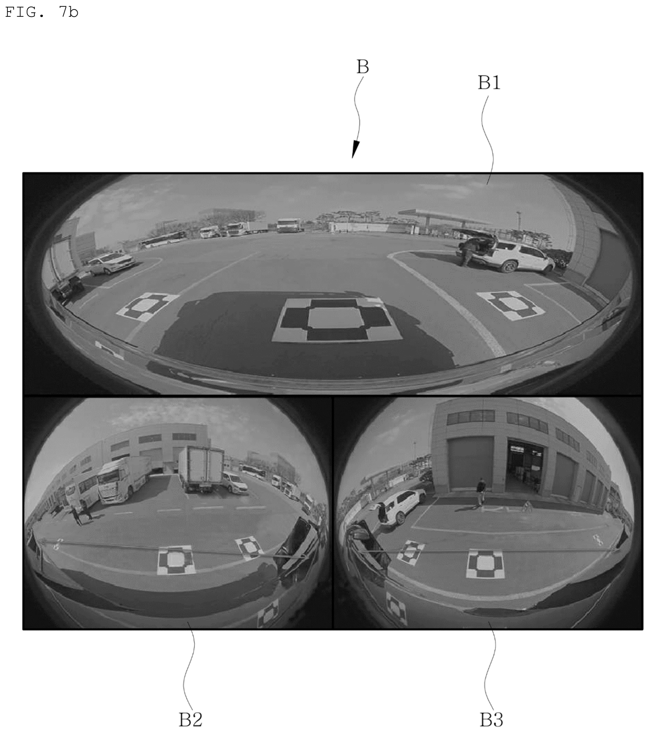

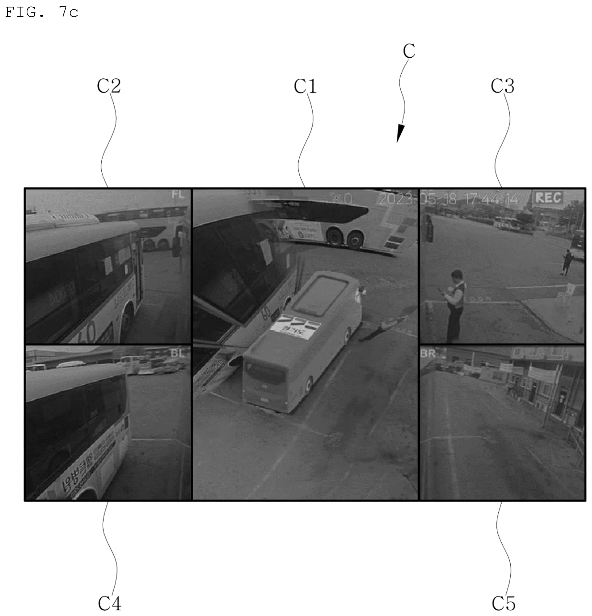

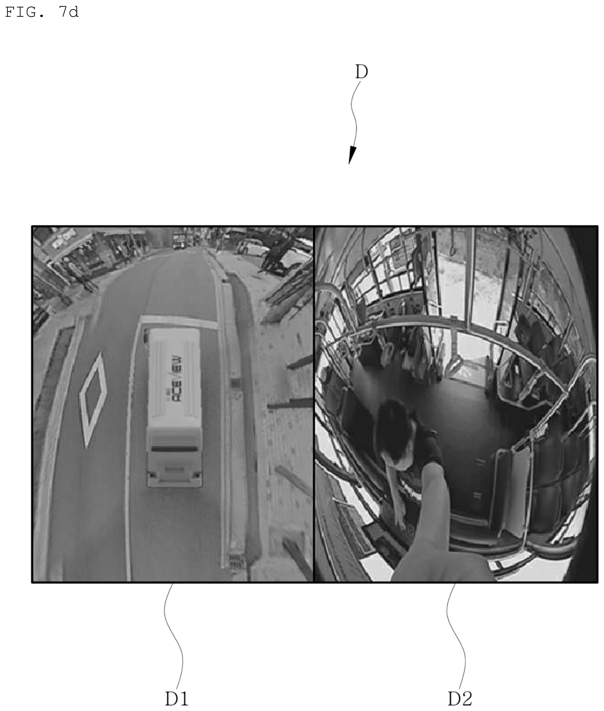

FIG. 7A to FIG. 7D are diagrams illustrating display screens of the vehicle real-time AVM system according to an embodiment of the present invention. FIG. 7A and FIG. 7B illustrate screens A and B displayed when the vehicle is in motion, FIG. 7C illustrates a screen C displaying images around a stopped vehicle, and FIG. 7D illustrates a screen D displaying a top-view image of a vehicle in motion together with an interior image.

In the example of FIG. 7A, the display unit 180 divides a display screen A into four divided screens A1, A2, A3, and A4. A 360° top-view image is displayed on the first divided screen A1, a front-view image is displayed on the second divided screen A2, a left-view image is displayed on the third divided screen A3, and a right-view image is displayed on the fourth divided screen A4.

In the example of FIG. 7B, the display unit 180 divides the display screen B into three divided screens B1, B2, and B3. A front-view image is displayed on the first divided screen B1, a left-view image is displayed on the second divided screen B2, and a right-view image is displayed on the third divided screen B3.

In the example of FIG. 7C, the display unit 180 divides the display screen C into five divided screens C1, C2, C3, C4, and C5. A 360° top-view image of the stopped vehicle is displayed on the first divided screen C1, a left-front-view image of the stopped vehicle is displayed on the second divided screen C2, a right-front-view image of the stopped vehicle is displayed on the third divided screen C3, a left-rear-view image of the stopped vehicle is displayed on the fourth divided screen C4, and a right-rear-view image of the stopped vehicle is displayed on the fifth divided screen C5.

In the example of FIG. 7D, the display unit 180 divides the display screen D into two divided screens D1 and D2. A 360° top-view image of the vehicle in motion is displayed on the first divided screen D1, and an interior image is displayed on the second divided screen D2.

As described above, the present invention divides the display screen of the display unit 180 into various forms based on preset image display information, and by using differently configured information depending on the type of actual event occurring in the vehicle which is in motion or stopped, the display screen may be operated in a manner that enhances driver awareness.

In addition, the present invention further includes additional image display information for displaying images captured in response to specific conditions associated with a high risk of accidents, and in response thereto, automatically switches the screen of the display unit 180, thereby further improving driver awareness of hazardous situations.

The control unit 190 controls overall operation of the vehicle AVM device 100 based on a preset AVM control algorithm. That is, the control unit 190 controls operations of the AVM camera 110, the additional camera 120, the image collection unit 130, the object detection unit 140, the event collection unit 150, the AVM operation information storage unit 160, the image processing unit 170, and the display unit 180 based on the AVM control algorithm.

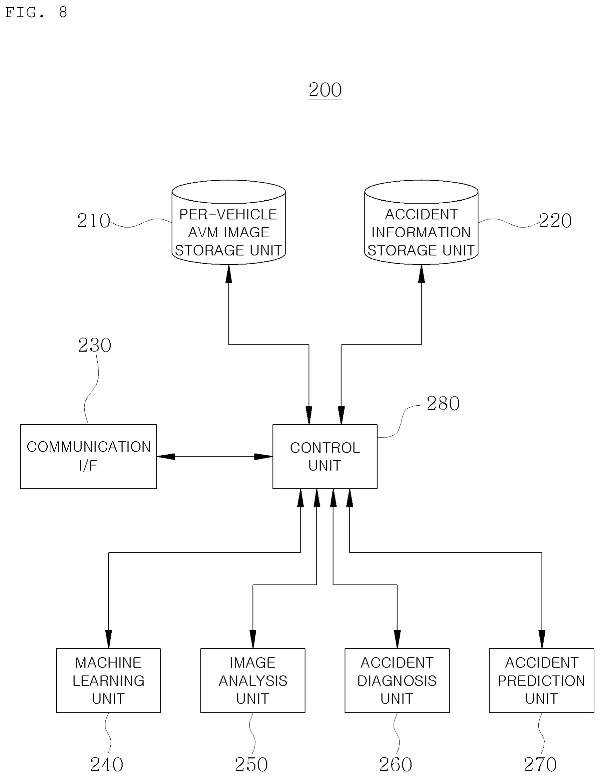

FIG. 8 is a schematic block diagram of an image control server according to an embodiment of the present invention. Referring to FIG. 1 to FIG. 8, the image control server 200 according to an embodiment of the present invention includes a per-vehicle AVM image storage unit 210, an accident information storage unit 220, a communication I/F 230, a machine learning unit 240, an image analysis unit 250, an accident diagnosis unit 260, an accident prediction unit 270, and a control unit 280.

The per-vehicle AVM image storage unit 210 stores real-time AVM images for each vehicle together with a location of the corresponding vehicle and a time at which the images were collected. To this end, the per-vehicle AVM image storage unit 210 operates under the control of the control unit 280, and the control unit 280 stores information transmitted from each of the at least one vehicle AVM devices 100 in the per-vehicle AVM image storage unit 210.

The accident information storage unit 220 stores diagnosis results of the accident diagnosis unit 260 to be described later, and corresponding accident images. For example, when it is diagnosed that an accident has occurred in a specific vehicle, the accident information storage unit 220 may receive and store the accident images and the type of accident through the control unit 280.

The communication I/F 230 communicates with a plurality of vehicle AVM devices 100 through an interface with a communication network, and may collect real-time AVM images from each of the at least one vehicle AVM devices 100 or transmit an arbitrary control signal to each of the at least one vehicle AVM devices 100. To this end, the communication I/F 230 operates under the control of the control unit 280. In particular, when an accident is predicted for a specific vehicle through the accident prediction unit 270 to be described later, a notification message generated by the control unit 280 may be transmitted to the vehicle AVM device 100 of the corresponding vehicle to provide an alert.

The machine learning unit 240 generates an accident situation model by being trained on a plurality of pieces of unspecified image information related to accidents or hazardous situations that may occur when the vehicle is in motion or stopped. For example, the machine learning unit 240 may be trained using past accident images according to accident types and generate an accident situation model for each accident type.

The image analysis unit 250 analyzes real-time AVM images for each vehicle using the accident situation model. For example, the image analysis unit 250 may calculate a similarity serving as an accident diagnosis criterion by comparing the accident situation model with the real-time AVM images for each vehicle.

The accident diagnosis unit 260 determines, in real time, any second vehicle experiencing an accident or dangerous situation, a type of accident or dangerous situation, and an accident occurrence time based on processing results of the image analysis unit 250. For example, when the similarity exceeds a preset threshold similarity, the accident diagnosis unit 260 may diagnose that an accident has occurred and determine, in real time, vehicle information, a type of accident or dangerous situation, and an accident occurrence time.

The accident prediction unit 270 predicts occurrence of an accident for a specific vehicle based on information stored in the per-vehicle AVM image storage unit 210 and the accident information storage unit 220. For example, the accident prediction unit 270 predicts an accident of any first vehicle by comparing and analyzing past images of any second vehicle experiencing an accident in the past, that is, images captured a predetermined time before the accident occurrence time of the second vehicle, and real-time AVM images of the first vehicle. When the images captured a predetermined time before the accident occurrence time of the second vehicle are similar to the real-time AVM images of the first vehicle (that is, when the similarity exceeds a preset threshold), it is possible to predict that an accident will occur in the first vehicle after the predetermined time.

The control unit 280 controls overall operations of the image control server 200 based on a preset image control algorithm. That is, the control unit 280 controls operations of the per-vehicle AVM image storage unit 210, the accident information storage unit 220, the communication I/F 230, the machine learning unit 240, the image analysis unit 250, the accident diagnosis unit 260, and the accident prediction unit 270 based on the image control algorithm.

In particular, the control unit 280 may notify a driver of the first vehicle of a prediction result of the accident prediction unit 270.

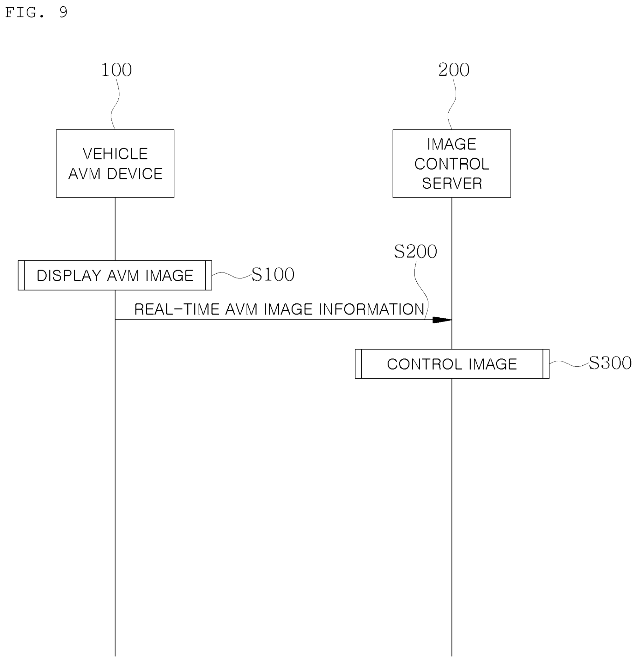

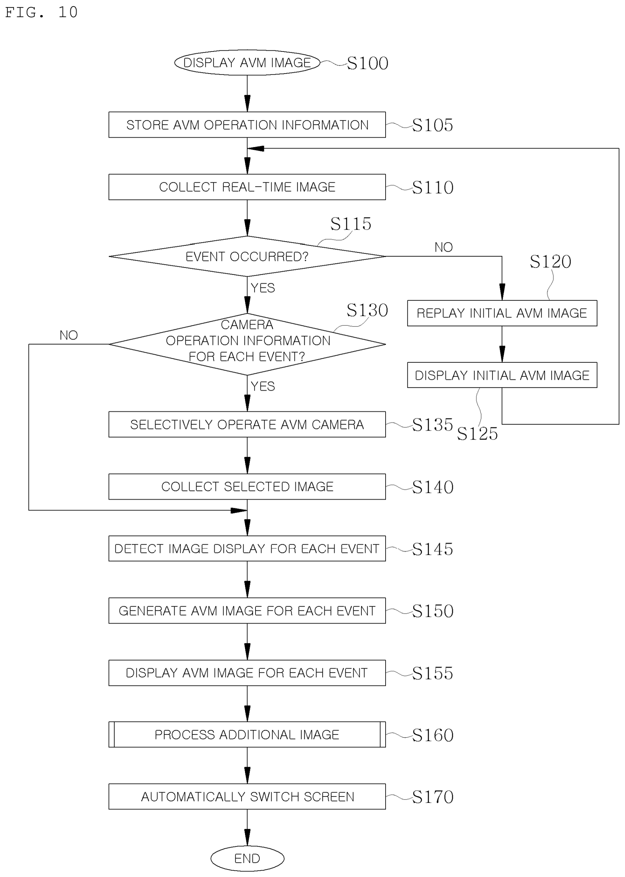

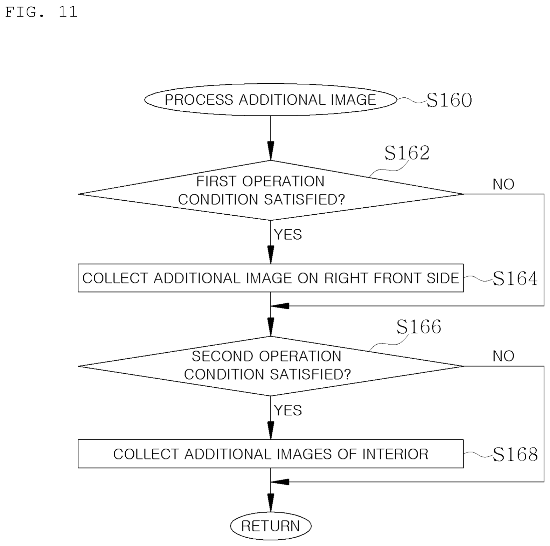

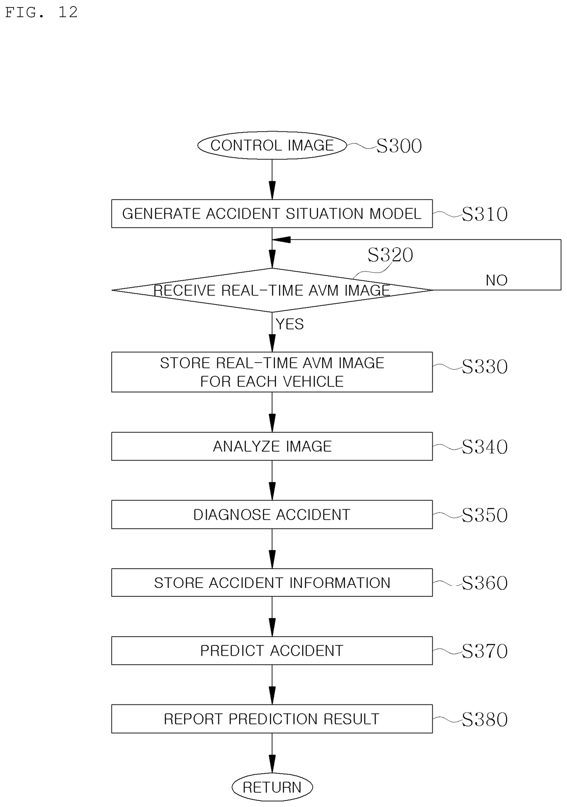

FIGs. 9 to 12 are schematic process flow diagrams of an AVM method having a real-time image control function according to an embodiment of the present invention. FIG. 9 illustrates an overall processing procedure of the AVM method having the real-time image control function according to an embodiment of the present invention, FIG. 10 and FIG. 11 illustrate processing procedures of an AVM image display process illustrated in FIG. 9, and FIG. 12 illustrates a processing procedure of an image control process illustrated in FIG. 9.

Referring to FIGs. 1 to 9, the AVM method using the vehicle AVM device 100 and the image control server 200 is as follows.

First, in step S100, the vehicle AVM device 100 generates a real-time AVM image from images collected from around the vehicle and displays the generated image. In particular, in step S100, the vehicle AVM device 100 may automatically switch a display screen of the real-time AVM image based on preset image display information for at least one predicted event expected to occur when the vehicle is in motion or stopped. A more detailed processing procedure therefor will be described later with reference to FIG. 10 and FIG. 11.

In step S200, the vehicle AVM device 100 transmits real-time AVM image information to the image control server 200. To this end, the vehicle AVM device 100 may transmit, to the image control server 200, real-time AVM image information including location information of the corresponding vehicle and a real-time AVM image display screen, based on preset image transmission conditions (for example, a preset transmission period or a display screen switching timing, etc.).

In step S300, the image control server 200 performs image control using the received real-time AVM image information. In this instance, the image control server 200 may collect the real-time AVM image information from at least one vehicle AVM device 100, collate the collected information, and perform image control for analyzing and managing operation information of each corresponding vehicle. A more detailed processing procedure therefor will be described later with reference to FIG. 12.

With reference to FIG. 1 to FIG. 11, step S100 will now be described in more detail as follows.

First, in step S105, the vehicle AVM device 100 stores AVM operation information preset for each of at least one predicted event expected to occur when the vehicle is in motion or stopped. To this end, the vehicle AVM device 100 may receive the AVM operation information through a user interface (not shown), receive the AVM operation information through a communication network, or store the AVM operation information offline through a separate storage medium in which the AVM operation information has been previously stored.

In this instance, the AVM operation information may include camera operation information for each predicted event and image display information. The camera operation information may include information on at least one AVM camera that needs to be operated for each predicted event (for example, camera identification information or camera installation location information, etc.), and the image display information may include image processing information for generating the real-time AVM image (for example, image synthesis/division algorithms), screen division information of the display unit 180 set differently for each predicted event to display the real-time AVM image, and image matching information in which images to be displayed are matched to the respective divided screens according to the division information.

In step S110, the image collection unit 130 collects real-time images around a first vehicle that is in motion or stopped. Since step S110 is performed before an event (that is, an actual event) occurs in the first vehicle, real-time images may be collected from all cameras 111 to 114, 121, and 122 included in the vehicle AVM device 100 based on initial setting information of the system.

In step S115, the control unit 190 verifies whether an event (that is, an actual event) occurs in the first vehicle to generate an AVM image in consideration of the operation information of the vehicle.

That is, when the actual event has not occurred as a result of verification in step S115, the control unit 190 generates an AVM image based on the real-time images collected in step S110, controls the image processing unit 170 to generate an initial AVM image in step S120, and controls the display unit 180 to display the initial AVM image in step S125. In this instance, the initial AVM image refers to an AVM image generated without considering the operation information of the vehicle (that is, occurrence of the actual event) and may refer to a top-view image provided by a conventional AVM system.

On the other hand, when the actual event has occurred as a result of verification in step S115, the control unit 190 may detect AVM operation information corresponding to the actual event and control the image collection unit 130, the image processing unit 170, and the display unit 180 based on the information. That is, the control unit 190 may control the image collection unit 130, the image processing unit 170, and the display unit 180 to collect images corresponding to the actual event and then generate and display a real-time AVM image from the collected images.

To this end, first, in step S130, the control unit 190 verifies whether camera operation information corresponding to the actual event is stored in the AVM operation information. When the camera operation information corresponding to the actual event is stored, in steps S135 and S140, the control unit 190 controls the image collection unit 130 to selectively operate the AVM cameras corresponding to the actual event and collect selected images. That is, in step S140, the image collection unit 130 may collect real-time images of corresponding areas from at least one camera 111 to 114, 121, and 122, that is, real-time images around the first vehicle corresponding to the respective operated cameras under the control of the control unit 190.

When camera operation information corresponding to the actual event is not stored as a result of verification in step S130, steps S135 and S140 may be omitted.

In step S145, the control unit 190 detects image display information corresponding to the actual event from image display information for each event included in the AVM operation information. In steps S150 and S155, the control unit 190 controls the image processing unit 170 and the display unit 180 to generate and display an AVM image considering the actual event (that is, an AVM image for each event) based on the detected image display information.

In step S160, the control unit 190 collects and processes additional images according to preset separate operation conditions, and in step S170, the control unit 190 controls the image collection unit 130 and the display unit 180 to automatically switch the screen to display the collected additional images.

To this end, the control unit 190 may store in advance operation conditions for operating each additional camera 120, and when a situation satisfying the operation conditions occurs, the control unit 190 may operate the corresponding additional camera 120 to collect the corresponding images. For example, the control unit 190 may store in advance specific conditions associated with a high risk of an accident, and when a driving situation satisfying the specific conditions occurs, the control unit 190 may operate the additional camera 120 to collect images of the corresponding area.

In this instance, the specific conditions associated with a high risk of an accident may include a case where the vehicle makes a right turn, a case where a person or an object is detected around the vehicle, a case where a person or an object moving toward the vehicle is detected, a case where passengers of a route bus are boarding or alighting, or a case where a dangerous situation occurs inside the vehicle.

That is, the control unit 190 stores in advance a first operation condition for operating the right front camera 121, and in steps S162 and S164, when a situation satisfying the first operation condition occurs, the control unit 190 may control the right front camera 121 and the image collection unit 130 to collect an additional image of the right front side. In this instance, the first operation condition may include a case where an event for operating the right turn signal of the vehicle is detected, a case where the steering wheel of the vehicle is rotated to the right by a predetermined angle or more, and a case where a person or an object approaching the right front side of the vehicle is detected. Accordingly, when it is determined in step S162 that the first operation condition is satisfied, the control unit 190 may operate the right front camera 121 to enhance right-front monitoring in step S164. To this end, the control unit 190 may control the object detection unit 140 to intensively monitor the right front side of the first vehicle, thereby detecting the presence of a person or an object approaching toward the right front side of the first vehicle when the person or object is present.

In addition, the control unit 190 may pre-store a second operation condition for operating the indoor camera 122, and in steps S166 and S168, the control unit 190 may control the indoor camera 122 and the image collection unit 130 to collect additional images of the vehicle interior when a situation satisfying the second operation condition occurs. In this instance, the second operation condition may include a case in which an event for opening an access door of the vehicle is detected, or a case in which a request signal from a driver is detected. Accordingly, when it is determined in step S166 that the second operation condition is satisfied, the control unit 190 may operate the indoor camera 122 to enhance monitoring of the vehicle interior in step S168.

In step S170, the control unit 190 automatically switches a display screen of the display unit 180 to display the additional images, and may automatically switch the display screen based on information differently set according to the type of actual event.

For example, the control unit 190 may pre-store a level of risk or urgency according to the type of actual event, and automatically switch the display screen of the display unit 180 based on the level of risk or urgency, such that the entire screen of the display unit 180 may be automatically switched to display the additional images, or a display state may be switched to display the additional images in a picture-in-picture form while maintaining the current screen, or the display state may be switched to replace a partial area of the current screen with the additional images.

With reference to FIGs. 1 to 12, step S300 will be described in more detail as follows.

First, in step S310, the image control server 200 generates an accident situation model. To this end, in step S310, the machine learning unit 240 is trained in advance using a plurality of pieces of unspecified image information on accidents or hazardous situations that may occur when the vehicle is in motion or stopped, and is trained in advance for each type, thereby generating an accident situation model for each type of accident.

In steps S320 and S330, the control unit 280 receives a real-time AVM image through the communication I/F 230 and stores the received image in the per-vehicle AVM image storage unit 210. In this instance, the control unit 280 may also store the location of the corresponding vehicle and time.

In step S340, the image analysis unit 250 analyzes real-time AVM images for each vehicle using the accident situation model, and in step S350, the accident diagnosis unit 260 diagnoses an accident based on an image analysis result of step S340. That is, in step S350, the accident diagnosis unit 260 reads, in real time, any second vehicle in which an accident or hazardous situation has occurred, a type of accident or hazardous situation, and an accident occurrence time.

In step S360, the control unit 280 stores a diagnosis result of step S350 and a corresponding accident image in the accident information storage unit 220.

In step S370, the accident prediction unit 270 predicts an accident for any first vehicle using the information stored in step S330 and step S360. To this end, the accident prediction unit 270 may predict an accident of the first vehicle by comparing and analyzing images from a predetermined time before an accident occurrence time of any second vehicle in which an accident occurred in the past with real-time AVM images of the first vehicle.

In step S380, the control unit 280 controls the communication I/F 230 to notify the driver of the first vehicle of a prediction result.

In this instance, in describing the AVM method having the image control function of the present invention, redundant descriptions of matters already described with reference to FIG. 1 through FIG. 7D are omitted.

Accordingly, the vehicle real-time AVM system and a method therefor of the present invention described above are characterized in that it is possible to improve awareness of the driver and effectively prevent accidents by reflecting operation information of the vehicle and selectively providing information necessary for safe driving, allowing necessary information to be appropriately provided to the drivers.

In addition, the present invention is characterized in that it is possible to automatically select and display information about an area that needs to be focused upon by a driver so that accidents caused by driver error may be effectively prevented by presetting image display information for each predicted event that may occur when the vehicle is in motion or stopped and then automatically switching a display screen of a real-time AVM image whenever an actual event occurs based on the image display information.

In addition, the present invention is characterized in that it is possible to strengthen surveillance in an area with high accident risk, thereby enabling intensive prevention of accidents caused by specific conditions with high accident risk by providing at least one additional camera to collect additional images under separate operation conditions, and preferentially displaying an additional image collected from the additional camera or a synthetic image with the additional image.

In addition, the present invention is characterized in that it is possible to remotely monitor and integrate AVM images reflecting operation information of the vehicle, which allows for faster and more accurate response in the event of an accident or emergency, by reflecting driving information of each vehicle and transmitting an AVM image generated from at least one vehicle AVM device to the image control server.

Even though embodiments of the present invention have been described above, the scope of rights of the present invention is not limited thereto, and includes all changes and modifications that are easily made by a person having ordinary skill in the technical field to which the present invention pertains from the embodiments and are recognized as being equivalent.

### [Description of reference numerals]

100: vehicle AVM system, 110: AVM camera
120: additional camera, 130: image collection unit
140: object detection unit, 150: event collection unit
160: AVM operation information storage unit, 170: image processing unit
180: display unit, 190: control unit

## Claims

1. An AVM (Around View Monitoring) system having an image control function, the AVM system comprising:
at least one vehicle AVM device installed in a vehicle and configured to collect a real-time image around the vehicle to generate and display a real-time AVM image, and to automatically switch a display screen of the real-time AVM image based on image display information preset for each event occurring when the vehicle is in motion or stopped; and
an image control server connected to the vehicle AVM devices via a communication network, configured to collect location information of a corresponding vehicle and the real-time AVM image from each of the vehicle AVM devices, and to analyze and manage operation information of each of corresponding vehicles based on the collected information.

2. The AVM system according to claim 1, wherein:
the vehicle AVM device comprises:
an AVM operation information storage unit configured to store AVM operation information including image display information preset for each of at least one predicted event predicted to occur when a vehicle is in motion or stopped;
an image collection unit configured to collect real-time images around a first vehicle in motion or stopped;
an image processing unit configured to generate a real-time AVM image from the collected image in response to an actual event occurring in the first vehicle; and
a display unit configured to display the real-time AVM image, and
the image processing unit detects image display information corresponding to the actual event from the AVM operation information storage unit, and generates the real-time AVM image based on the image display information.

3. The AVM system according to claim 2, wherein the image display information comprises:
division information of a screen of the display unit, which is differently set for each predicted event to display the real-time AVM image; and
image matching information in which an image to be displayed is matched to each of divided screens divided based on the division information.

4. The AVM system according to claim 3, wherein:
the AVM operation information further comprises camera driving information matched to information on at least one AVM camera to be driven for each predicted event, and
the image collection unit detects the camera driving information corresponding to the actual event from the AVM operation information storage unit, and drives the AVM cameras based on the camera driving information to collect real-time images around the first vehicle.

5. The AVM system according to claim 2, wherein:
the image collection unit further comprises a first additional camera configured to selectively operate exclusively when a preset first operation condition is satisfied, and collect a first additional image that is a real-time additional image of a right front side of the first vehicle, and
the display unit switches a display screen to display the first additional image based on preset first additional image display information in response to operation of the first additional camera.

6. The AVM system according to claim 5, wherein:
the vehicle AVM device further comprises an object detection unit configured to detect presence/absence of an object located at a right front side of the first vehicle and a movement direction of the object, and
the object detection unit generates a first additional event for operating the first additional camera when an object approaching the right front side of the first vehicle is detected.

7. The AVM system according to claim 5, wherein:
the vehicle AVM device further comprises a second additional camera configured to selectively operate exclusively when a preset second operation condition is satisfied, and collect a second additional image that is a real-time additional image of an interior of the first vehicle, and
the display unit switches a display screen to display the second additional image based on preset second additional image display information in response to operation of the second additional camera.

8. An AVM method having an image control function, the method using at least one vehicle AVM device installed in a vehicle and configured to collect a real-time image around the vehicle to generate and display a real-time AVM image and an image control server communicating with the vehicle AVM devices, the method comprising:
an AVM image display step of automatically switching, by the vehicle AVM device, a display screen of the real-time AVM image based on image display information preset for each of at least one predicted event that is predicted to occur when the vehicle is in motion or stopped;
an AVM image transmission step of transmitting, by the vehicle AVM device, location information of a corresponding vehicle and the display screen of the real-time AVM image to the image control server based on preset image transmission conditions; and
an image control step of analyzing and managing, by the image control server, operation information of each corresponding vehicle based on information received from the vehicle AVM device.

9. The AVM method according to claim 8, wherein:
the AVM image display step comprises:
an AVM operation information storage step of storing, by the vehicle AVM system, AVM operation information including image display information preset for each predicted event;
an image collection step of collecting a real-time image around a first vehicle that is in motion or stopped;
an image processing step of generating a real-time AVM image from the collected image in response to an actual event occurring in the first vehicle; and
an image display step of displaying the real-time AVM image, and
the image processing step comprises detecting image display information corresponding to the actual event from the AVM operation information, and then generating the real-time AVM image based on the image display information.

10. The AVM method according to claim 9, wherein the image display information comprises:
division information of a screen of a display unit, which is differently set for each predicted event to display the real-time AVM image; and
image matching information in which an image to be displayed is matched to each of divided screens divided based on the division information.

11. The AVM method according to claim 9, wherein:
the AVM operation information further comprises camera driving information matched to information on at least one AVM camera to be driven for each predicted event, and
the image collection step comprises detecting the camera driving information corresponding to the actual event from the AVM operation information, and then driving the AVM camera based on the camera driving information to collect a real-time image around the first vehicle.

12. The AVM method according to claim 9, wherein:
the image collection step further comprises a first additional image collection step of collecting a first additional image that is a real-time additional image of a right front side of the first vehicle when a preset first operation condition is satisfied, and
the image display step comprises automatically switching a display screen of the display unit to display the first additional image based on preset first additional image display information in response to collection of the first additional image.

13. The AVM method according to claim 12, wherein:
the first additional image collection step further comprises a monitoring step of intensively monitoring the right front side of the first vehicle, and
the first additional image collection step comprises collecting the first additional image when an object approaching the right front side of the first vehicle is detected as a result of the monitoring.

14. The AVM method according to claim 12, wherein:
the image collection step further comprises a second additional image collection step of collecting a second additional image that is a real-time additional image of an interior of the first vehicle when a preset second operation condition is satisfied, and
the image display step comprises switching a display screen of the display unit to display the second additional image based on preset second additional image display information in response to collection of the second additional image.
